# EUROPÄISCHE PATENTSCHRIFT

(11) **EP 2 744 842 B1**
(45) Veröffentlichungstag und Bekanntmachung des Hinweises auf die Patenterteilung: **09.12.2015**
(21) Anmeldenummer: 12741332.6
(22) Anmeldetag: 30.07.2012
(51) Int. Cl.: C08G 18/83, C08G 65/336, C08L 83/04, C09D 183/04, C09J 183/04, C09J 175/04, C08L 83/06, C09D 183/06, C09J 183/06, C09J 175/08, C08G 18/71, C08G 18/28, C08G 18/48, C08L 89/04

(54) **VERNETZBARE MASSEN AUF BASIS VON ORGANYLOXYSILANTERMINIERTEN POLYMEREN**
CROSS-LINKABLE MATERIALS BASED ON ORGANYL OXYSILANE-TERMINATED POLYMERS
MATIÈRES RÉTICULABLES À BASE DE POLYMÈRES À TERMINAISON ORGANYLOXYSILANE

(30) Priorität: 19.08.2011 DE 102011081264
(43) Veröffentlichungstag der Anmeldung: 25.06.2014
(73) Patentinhaber: Wacker Chemie AG, 81737 München (DE)
(72) Erfinder: STANJEK, Volker, 84539 Ampfing (DE); BACHMEIER, Bernd-Josef, 84533 Haiming (DE); ZANDER, Lars, 84524 Neuötting (DE)
(74) Vertreter: Budczinski, Angelika
(86) Internationale Anmeldenummer: PCT/EP2012/064889
(87) Internationale Veröffentlichungsnummer: WO 2013/026654

(56) Entgegenhaltungen:
- WO-A1-96/34028
- WO-A1-2011/026658
- WO-A1-2011/131506
- DE-A1-102010 001 588
- US-A1- 2002 115 811
- US-A1- 2010 154 991
- US-A1- 2011 130 512

## Beschreibung

Die Erfindung betrifft vernetzbare Massen von silanvernetzenden Prepolymeren, Verfahren zu deren Herstellung und deren Verwendung als Kleb- und Dichtstoffe, insbesondere als Klebstoffe mit hoher Zugscherfestigkeit u.a. für Holzverklebungen.

Zur Durchführung von Holzverklebungen sind u.a. Holzleime bekannt, die üblicherweise auf Basis von Polyvinylacetatdispersionen formuliert sind. Diese zeigen zwar eine gute Adhäsion auf Holz, ihre Abbindegeschwindigkeit, d.h. die bis zur Ausbildung einer belastbaren Verklebung verstreichende Zeit, ist jedoch sehr lang, so dass eine andauernde mechanische Fixierung der zu verklebenden Werkstücke in der Regel unverzichtbar ist. Darüber hinaus ist der Einsatz dieses Klebstofftyps problematisch, wenn die Verklebung Feuchtigkeit ausgesetzt wird, da die Holzleime üblicherweise nur eine begrenzte Beständigkeit gegenüber Wasser aufweisen. Im Falle stark beanspruchter Holzkonstruktionen, bei denen hohe Anforderungen an die mechanische Festigkeit der Bauteile gestellt werden und die Verbundfestigkeit auch nach vielen Jahren unter Witterungseinflüssen noch ausreichend hoch sein soll, sind derartige Holzleime meist nicht geeignet.

Hier werden typischerweise isocyanatvernetzende PU-Klebstoffe eingesetzt. Diese enthalten meist aromatische Polyisocyanate. Derartige Systeme härten durch eine Reaktion der Isocyanatgruppen mit (Luft-)Feuchtigkeit aus. Da PU-Klebstoffe über eine chemische Vernetzungsreaktion härten und sich auch chemisch an Holz als Substrat anbinden können, zeigen sie deutlich bessere mechanische Eigenschaften und sind auch wesentlich beständiger gegenüber äußeren (Witterungs-) Einflüssen wie Feuchtigkeit oder direkten Wasserkontakt.

Die generelle Leistungsfähigkeit von Klebstoffen wird durch die Erfüllung von Normen, wie beispielsweise die DIN EN 204, Beanspruchungsgruppe D1 - D4 festgestellt. Diese Normen können in der Regel von isocyanatvernetzenden Klebstoffen erfüllt werden.

Dennoch besitzen auch isocyanatvernetzende Klebstoffe z.T. massive systemimmanente Nachteile. Z.B. besitzen einkomponentige PU-Klebstoffsysteme in der Regel nur moderate Härtungsgeschwindigkeiten. Zwar kann die Isocyanatvernetzung prinzipiell durch eine Katalyse stark beschleunigt werden, aber da eine derartige Katalyse grundsätzlich auch unerwünschte Nebenreaktionen der Isocyanatgruppen katalysiert (z.B. Bildung von Allophanaten, Uretdionen, Isocyanuraten etc.), weisen die entsprechenden Systeme dann keine hinreichende Lagerstabilität mehr auf.

Ein weiterer Nachteil der isocyanatvernetzenden Klebstoffe ist die gesundheitliche Einstufung, die von sensibilisierend bis giftig reicht. Kritisch ist hier die Menge an verbleibenden monomeren Isocyanaten, die nur schwer zu entfernen sind. Dies ist insofern problematisch für den Endanwender, d.h. der Handwerker oder Do-it-yourself-Anwender, da er nicht nur mit dem ausgehärteten und damit isocyanatfreien und völlig unbedenklichen Produkt, sondern auch mit dem isocyanathaltigen Klebstoff, bzw. monomeren Isocyanaten in Kontakt kommt. Beim ungeübten Heimwerker besteht dabei die besondere Gefahr, dass die Produkte gegebenenfalls nicht fachkundig und/oder sachgerecht angewendet werden. Zusätzliche Gefahren gehen hier auch von einer nicht sachgerechten Lagerung, z.B. in Reichweite von Kindern, aus. Beim professionellen Handwerker hingegen ist zwar von einer sachgerechten Anwendung und Lagerung auszugehen. Hier besteht jedoch gegebenenfalls das Problem, dass der professionelle Anwender äußerst regelmäßig - gegebenenfalls sogar mehrmals täglich - mit dem isocyanathaltigen Material umgehen muss, was insbesondere ob der o.g. sensibilisierenden sowie gegebenenfalls krebserregenden Wirkung von Isocyanaten potentiell kritisch ist.

Etwas günstiger sind hier isocyanatvernetzende Klebstoffe, die nur sehr geringe Gehalte an flüchtigen Isocyanaten aufweisen und somit zumindest kennzeichnungsfrei sind. Diese basieren jedoch meist auf aliphatischen Isocyanaten, welche wiederum weniger reaktiv sind. Diese Klebstoffe sind somit für Anwendungen, in denen es auf eine schnelle Abbindung des Klebstoffes ankommt, noch einmal ungünstiger als herkömmliche PU-Klebstoffe.

Eine alternative Härtungstechnologie, die zunehmend Anwendung im Klebstoffbereich findet, ist die Silanvernetzung, bei der alkoxysilanfunktionelle Prepolymere bei Kontakt mit Luftfeuchtigkeit zunächst hydrolysieren und anschließend durch eine Kondensationsreaktion aushärten. Die entsprechenden silanfunktionellen - meist silanterminierten - Prepolymere sind toxikologisch völlig unbedenklich.

Polymersysteme, die über reaktive Alkoxysilylgruppen verfügen, sind seit langem bekannt. Bei Kontakt mit Wasser bzw. Luftfeuchtigkeit sind diese alkoxysilanterminierten Polymere bereits bei Raumtemperatur in der Lage, unter Abspaltung der Alkoxygruppen miteinander zu kondensieren. So zeigen Klebstoffe auf Basis von alkoxysilanvernetzenden Polymeren im ausgehärteten Zustand nicht nur gute Haftungseigenschaften auf einigen Substraten, sondern auch sehr gute mechanische Eigenschaften, da sie sowohl reißfest als auch hochelastisch sein können.

Dabei werden in vielen Anwendungen einkomponentige Systeme (1K-Systeme) bevorzugt, die bei Kontakt mit Luftfeuchtigkeit aushärten. Die entscheidenden Vorteile von einkomponentigen Systemen ist vor allem deren sehr leichte Applizierbarkeit, da hier keine Mischung verschiedener Klebstoffkomponenten durch den Anwender erforderlich ist. Neben der Zeit-/Arbeitsersparnis und der sicheren Vermeidung eventueller Dosierungsfehler, ist bei einkomponentigen Systemen auch nicht die Notwendigkeit gegeben, den Kleb-/Dichtstoff innerhalb eines meist recht engen Zeitfensters zu verarbeiten, wie dies bei mehrkomponentigen Systemen nach erfolgter Durchmischung der beiden Komponenten der Fall ist.

Nachteilig an diesen Systemen entsprechend des Standes der Technik ist insbesondere die geringe Reaktivität der entsprechenden MS- bzw. SPUR-Polymere gegenüber Feuchtigkeit, was eine aggressive Katalyse erforderlich macht. Die entsprechenden Mischungen enthalten daher typischerweise erhebliche Mengen toxikologisch bedenklicher Zinnkatalysatoren.

Hier ist der Einsatz von sogenannten α-silanterminierten Prepolymeren von Vorteil, die über reaktive Alkoxysilylgruppen verfügen, die durch einen Methylenspacer mit einer benachbarten Urethaneinheit verbunden sind. Diese Verbindungsklasse ist hochreaktiv und benötigt weder Zinnkatalysatoren noch starke Säuren oder Basen, um bei Luftkontakt hohe Aushärtgeschwindigkeiten zu erreichen. Kommerziell verfügbare α-silanterminierte Prepolymere sind GENIOSIL® STP-E10 oder -E30 der Fa. Wacker Chemie AG.

WO 2011/131506 A1 beschreibt den Einsatz von α-silanterminierten Prepolymeren in feuchtigkeitshärtenden Beschichtungen, insbesondere in Beschichtungen zur Abdichtung von Oberflächen gegen das Eindringen von Wasser. In Vergleichsbeispiel 4 wird dabei festgestellt, dass eine genau spezifizierte Mischung aus einem α-silanterminierten Prepolymeren, einem γ-silanterminierten Prepolymeren, einem Siliconharz sowie weiterer Bestandteile für diese Anwendung nicht geeignet sind.

Nachteilig an den meisten gängigen silanvernetzenden Systemen ist jedoch eine relativ geringe Zugscherfestigkeit. Daher beschränken sich typische Anwendungen für diesen neuen Klebstofftyp in der Regel auf Bereiche, in denen eher elastische als hochreißfeste Klebstoffe benötigt werden.

Bei Klebstoffen, die den europäischen Standard DIN EN 204, Beanspruchungsgruppe D4, erfüllen, sind silanvernetzende Klebstoffe prinzipiell ebenfalls erreichbar, z.B. mit silanterminierten Polyurethanen, wie sie z.B. in WO2011/026658 beschrieben sind. Hier wird die hohe Zugscherfestigkeit durch den Einsatz von Prepolymeren erreicht, die zum einen eine sehr hohe Dichte an zur Wasserstoffbrückenbildung befähigten Urethan- und/oder Harnstoffeinheiten aufweisen und zum anderen relativ kurzkettig sind und somit eine entsprechend hohe Zahl an vernetzbaren Silangruppen aufweisen. Derartige Systeme besitzen jedoch zwangsläufig zwei systemimmanente Nachteile. Denn zum einen erfordert die Herstellung von Prepolymeren mit einer hohen Konzentration an silanvernetzenden Gruppen entsprechend große Silanmengen. Diese stellen jedoch in der Regel die kostenintensivesten Prepolymerbestandteile dar, was die Rohstoffkosten für diese Produkte entsprechend steigen lässt. Zum anderen führt die zur Erreichung hoher Zugscherfestigkeiten ebenfalls notwendige hohe Konzentration an Urethan- und/oder Harnstoffgruppen zu sehr hohen Prepolymerviskositäten. Entsprechend problematisch ist sowohl die Compoundierung dieser Prepolymere zu fertig formulierten Klebstoffen wie auch die Anwendung dieser meist ebenfalls vergleichsweise hochviskosen Endprodukte. Gegenstand der Erfindung sind vernetzbare Massen enthaltend
(A) 100 Gewichtsteile Verbindungen (A) der Formel

   Y-[(CR¹₂)_{b}*-*SiRₐ(OR²)₃₋ₐ]ₓ (I),

   wobei
   - Y: einen x-wertigen, über Stickstoff, Sauerstoff, Schwefel oder Kohlenstoff gebundenen organischen Polymerrest bedeutet, der als Polymerkette Polyoxyalkylen, Kohlenwasserstoffpolymer, Polyurethan, Polyester, Polyamid, Polyacrylat, Polymethacrylat oder Polycarbonat enthält,
   - R: gleich oder verschieden sein kann und einen einwertigen, gegebenenfalls substituierten, SiC-gebundenen Kohlenwasserstoffrest darstellt,
   - R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   - R²: gleich oder verschieden sein kann und Wasserstoffatom oder einen einwertigen, gegebenenfalls substituierten Kohlenwasserstoffrest darstellt,
   - x: eine ganze Zahl von 1 bis 10, bevorzugt 1, 2 oder 3, besonders bevorzugt 1 oder 2, ist,
   - a: gleich oder verschieden sein kann und 0, 1 oder 2, bevorzugt 0 oder 1, ist und
   - b: gleich oder verschieden sein kann und eine ganze Zahl von 1 bis 10, bevorzugt 1, 3 oder 4, besonders bevorzugt 1 oder 3, insbesondere 1, ist, und
(B) mehr als 50 Gewichtsteile Siliconharze enthaltend Einheiten der Formel

   R³_{c}(R⁴O)_{d}R⁵ₑSiO_{(4-c-d-e)/2} (II),

   wobei
   - R³: gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
   - R⁴: gleich oder verschieden sein kann und Wasserstoffatom oder einen einwertigen, gegebenenfalls substituierten Kohlenwasserstoffrest bedeutet,
   - R⁵: gleich oder verschieden sein kann und einen einwertigen, SiC-gebundenen, gegebenenfalls substituierten aromatischen Kohlenwasserstoffrest bedeutet,
   - c: 0, 1, 2 oder 3 ist,
   - d: 0, 1, 2 oder 3, bevorzugt 0, 1 oder 2, besonders bevorzugt 0 oder 1, ist und
   - e: 0, 1 oder 2, bevorzugt 0 oder 1, ist,
mit der Maßgabe, dass die Summe aus c+d+e kleiner oder gleich 3 ist und in mindestens 40 % der Einheiten der Formel (II) die Summe c+e gleich 0 oder 1 ist
ausgenommen Zusammensetzung erhältlich durch Vermischen in einem geeigneten Mischgerät von 20,0 g GENIOSIL^{®} STP-E10 (käuflich erwerblich bei Wacker Chemie AG), 10,0 g GENIOSIL^{®} STP-E15 (käuflich erwerblich bei Wacker Chemie AG), 23,5 g Siliconharz (SILRES^{®} SY 231; käuflich erwerblich bei Wacker Chemie AG), 2,0 g Vinyltrimethoxysilan, 1,0 g Hydrophobe Kieselsäure (HDK^{®} H2000; käuflich erwerblich bei Wacker Chemie AG), 20,5 g Aluminiumtrihydrat (ATH), 21,0 g Talkum und 2,0 g 3-Aminopropyltrimethoxysilan.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloal kylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Bei Polymerrest Y handelt es sich um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen, Polyethylen oder Polypropylen und Copolymere von Polyisobutylen mit Isopren; Polyisoprene; Polyurethane; Polyester; Polyamide; Polyacrylate; Polymethacrylate; und Polycarbonate enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -0- und -NR'- an die Gruppe bzw. Gruppen -[(CR¹₂)_{b}-SiRₐ(OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Beispiele für Reste R' sind Cyclohexyl-, Cyclopentyl-, n- und iso-Propyl-, n-, iso- und t-Butyl-, die diversen Stereoisomere des Pentylrests, Hexylrests oder Heptylrests sowie der Phenylrest.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Bei den Resten R" handelt es sich vorzugsweise um Alkylgruppen mit 1 bis 10 Kohlenstoffatomen, besonders bevorzugt um Methyl-, Ethyl- oder Propylreste.

Besonders bevorzugt handelt es sich bei Rest Y in Formel (I) um Polyurethanreste und Polyoxyalkylenreste, insbesondere um polyoxypropylenhaltige Polyurethanreste oder Polyoxypropylenreste.

Die Komponente (A) kann dabei die auf die beschriebene Weise angebundenen Gruppen -[(CR¹₂)_{b}-SiRₐ(OR²)₃₋ₐ] an beliebigen Stellen im Polymer aufweisen, wie etwa kettenständig und/oder endständig, bevorzugt kettenständig und endständig, besonders bevorzugt endständig.

Bei den Endgruppen der erfindungsgemäß eingesetzten Verbindungen (A) handelt es sich vorzugsweise um solche der allgemeinen Formeln

-O-C(=O)-NH- (CR¹₂)_{b}-SiRₐ(OR²)₃₋ₐ (III)

und

-NH-C(=O)-NR'-(CR¹₂)_{b}-SiRₐ(OR²)₃₋ₐ (IV),

wobei die Reste und Indizes eine der oben dafür angegebenen Bedeutungen haben.

In einer besonders bevorzugten Ausführung der Erfindung handelt es sich bei Komponente (A) um silanterminierte Polyether und silanterminierte Polyurethane, insbesondere um silanterminierte Polypropylenglycole und silanterminierte Polyurethane jeweils mit über -O-C(=O)-NH-(CR¹₂)_{b}-Gruppen oder -NH-C(=O)-NR'-(CR¹₂)_{b}-Gruppen angebundene Dimethoxymethylsilyl-, Trimethoxysilyl-, Diethoxymethylsilyl- oder Triethoxysilyl-Endgruppen, wobei R', R¹ und b eine der oben angegebenen Bedeutungen haben.

Die mittleren Molekulargewichte Mₙ der Verbindungen (A) betragen vorzugsweise mindestens 400 g/mol, besonders bevorzugt mindestens 600 g/mol, insbesondere mindestens 800 g/mol und vorzugsweise höchstens 30 000 g/mol, besonders bevorzugt höchstens 19 000 g/mol, insbesondere höchstens 13 000 g/mol.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 1000 Pas, bevorzugt höchstens 700 Pas, jeweils gemessen bei 20°C.

Die erfindungsgemäß eingesetzten Verbindungen (A) sind handelsübliche Produkte oder können nach in der Chemie gängigen Verfahren hergestellt werden.

Die Herstellung der Polymere (A) kann durch verschiedene, bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen mit Verbindungen, die isocyanatreaktive Gruppen aufweisen.

Bei einer ersten besonders bevorzugten Ausführung der Erfindung enthält die Komponente (A) als Polymerreste Y lineare oder verzweigte Polyoxyalkylenreste, besonders bevorzugt Polyoxypropylenreste, deren Kettenenden vorzugsweise über -O-C(=O)-NH- an die Gruppe bzw. Gruppen -[(CR¹₂)_{b}-SiRₐ(OR²)₃₋ₐ] gebunden sind, wobei die Reste und Indizes eine der oben genannten Bedeutungen haben. Vorzugsweise sind dabei mindestens 85%, besonders bevorzugt mindestens 90%, insbesondere mindestens 95%, aller Kettenenden über -O-C(=O)-NH- an die Gruppe -[(CR¹₂)_{b}-SiRₐ(OR²)₃₋ₐ] gebunden. Die Polyoxyalkylenreste Y weisen vorzugsweise mittlere Molmassen Mₙ von 4 000 bis 30 000 Dalton, bevorzugt von 8 000 bis 20 000 Dalton auf. Geeignete Verfahren zur Herstellung einer entsprechenden Komponente (A) sowie auch Beispiele für die Komponente (A) selbst sind bekannt und unter anderem in EP 1 535 940 B1 (Absätze [0005] - [0025] sowie Beispiele 1-3 und Vergleichsbeispiel 1-4) oder EP 1 896 523 B1 (Absätze [0008]-[0047]) beschrieben, die zum Offenbarungsgehalt der vorliegenden Anmeldung zu zählen sind. Entsprechende silanterminierte Polymere sind auch kommerziell erhältlich, z.B. unter dem Namen GENIOSIL^{®} STP-E der Fa. Wacker Chemie.

Bei einer zweiten ebenfalls besonders bevorzugten Ausführung der Erfindung enthält die Komponente (A) als Polymerreste Y lineare oder verzweigte Polyurethanreste, bei deren Herstellung vorzugsweise von Polyether- und/oder Polyesterpolyolen Y1 mit einer mittleren Molmasse von 200 bis 20 000 Dalton ausgegangen wird. Dabei werden Polyetherpolyole, insbesondere Polypropylenglycole, mit einer mittleren Molmasse von 300 bis 10 000 Dalton, insbesondere von 400 bis 5 000 Dalton, besonders bevorzugt eingesetzt. Die Polyole Y1 können verzweigt oder unverzweigt sein. Besonders bevorzugt werden unverzweigte Polyole oder aber Polyole mit einer Verzweigungsstelle. Es können auch Mischungen aus verzweigten und unverzweigten Polyolen eingesetzt werden.

Vorzugsweise werden die Polyole Y1 bei der Herstellung der Komponente (A) mit mindestens einer isocyanatfunktionellen Verbindung Y2 umgesetzt. Vorzugsweise handelt es sich bei Y2 um Di- oder Polyisocyanate. Beispiele für gebräuchliche Diisocyanate sind Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, Diisocyanatonaphthalin (NDI), Isophorondiisocyanat (IPDI) oder auch von Hexamethylendiisocyanat (HDI). Beispiele für Polyisocyanate sind polymeres MDI (P-MDI), Triphenylmethantriisocyanat oder aber Trimerisate (Biurete oder Isocyanurate) der oben genannten Diisocyanate.

Die Isocyanate Y2 können dabei bezüglich des Verhältnisses der Isocyanatgruppen zu den Hydroxylgruppen des Polyols im Unterschuss (Variante 1) oder im Überschuss (Variante 2) eingesetzt werden. Bei der Variante 1 wird ein Polyurethanpolymer erhalten, dessen Kettenenden mit Hydroxylgruppen terminiert sind, bei der Variante 2 ein Polymer, dessen Kettenenden aus Isocyanatgruppen bestehen.

Das bei Variante 1 erhaltene hydroxylgruppen-funktionelle Polyurethanpolymer wird dann bevorzugt mit einem Silan Y3 der allgemeinen Formel

OCN- (CR¹₂)_{b}-SiRₐ(OR²)₃₋ₐ (V)

umgesetzt, wobei die Reste und Indizes eine der oben dafür angegebenen Bedeutungen haben. Es wird ein Polyurethan mit Kettenenden der Formel (III) erhalten.

Besonders bevorzugt ist jedoch Variante 2. Das dabei erhaltene isocyanatfunktionelle Polyurethanpolymer wird dann bevorzugt in einem zweiten Reaktionsschritt mit einem isocyanatreaktiven Silan Y3' der allgemeinen Formel

Z-(CR¹₂)_{b}-SiRₐ(OR²)₃₋ₐ (VI)

umgesetzt, wobei
Z eine isocyanatreaktive Gruppe darstellt und alle sonstigen Reste und Indizes eine der oben dafür angegebenen Bedeutungen haben.

Bei der isocyanatreaktiven Gruppe Z handelt es sich vorzugsweise um eine Hydroxylgruppe oder eine Aminogruppe, besonders bevorzugt eine Aminogruppe der Formel NHR' mit R' gleich einer der obengenannten Bedeutungen. Es wird ein silanterminiertes Polyurethan mit Kettenenden der Formel (IV) erhalten.

Schließlich können neben den obengenannten Komponenten Y1 bis Y3 auch noch monomere Alkohole Y4 Komponente bei der Herstellung der Verbindung (A) eingesetzt werden. Die Alkohole Y4 können über eine aber auch über mehrere Hydroxylgruppen verfügen. Hinsichtlich der Molmasse und des Verzweigungsgrades der Alkohole Y4 gibt es bevorzugt keinerlei Beschränkungen.

Falls zur Herstellung der Verbindungen (A) Alkohole Y4 eingesetzt werden, handelt es sich bevorzugt um solche der allgemeinen Formel

R⁶OH (VII),

wobei R⁶ eine der für den Rest R angegebenen Bedeutungen hat.

Bei Rest R⁶ handelt es sich vorzugsweise um einen linearen, oder verzweigten Alkyl- oder Alkenylrest mit mindestens 8 Kohlenstoffatomen, wobei lineare Alkylreste mit mindestens 8 Kohlenstoffatomen, insbesondere lineare Alkylreste mit mindestens 10 Kohlenstoffatomen, besonders bevorzugt werden. Vorzugsweise weist R⁶ höchstens 30, besonders bevorzugt höchstens 20, Kohlenstoffatome auf.

Diese Alkohole können dabei ebenfalls mit den Di- oder Polyisocyanaten Y2 reagieren. Es resultieren Verbindungen (A), deren Kettenenden nicht ausschließlich mit Kettenenden der Formel (IV) terminiert sind, sondern auch über einen gewissen Anteil, vorzugsweise mindestens 2%, besonders bevorzugt mindestens 4% und vorzugsweise höchstens 40%, insbesondere höchstens 20%, an Kettenenden der allgemeinen Formel

-NH-C(=O)-O-R⁶ (VIII)

verfügen, in der R⁶ die oben genannten Bedeutungen aufweist.

Die Alkohole Y4 können dabei in einem separaten Reaktionsschritt in die Komponente (A) eingebaut worden sein, z.B. vor oder nach der Reaktion der Polyole Y1 mit den Isocyanaten Y2. Alternativ kann der Einbau aber auch gleichzeitig mit einem anderen Reaktionsschritt erfolgen, z.B. indem eine Mischung aus den Polyolen Y1 und den Alkoholen Y4 mit den Isocyanaten Y2 zur Reaktion gebracht wird.

Vorzugsweise werden dabei Alkohole Y4, Mischungen verschiedener Alkohole Y4 oder aber Mischungen aus Polyolen Y1 und Alkoholen Y4 eingesetzt, die bei Raumtemperatur und dem Druck der umgebenden Atmosphäre, also bei 900 bis 1100 hPa, flüssig sind und dementsprechend einfach zu der Reaktionsmischung zudosiert werden können.

Die Reihenfolge der Syntheseschritte ist dabei prinzipiell auch austauschbar. So kann der erste Syntheseschritt prinzipiell auch in einer Reaktion des Isocyanates Y2 mit dem Silan Y3' bestehen und die Reaktion mit dem Polyol Y1 erst im zweiten Reaktionsschritt stattfinden. Ebenso ist es denkbar, beide Reaktionsschritte gleichzeitig durchzuführen.

Sämtliche Reaktionen zur Herstellung der Komponente (A) können sowohl diskontinuierlich als auch kontinuierlich durchgeführt werden.

Die Herstellung der Komponenten (A) erfolgt gegebenenfalls in Gegenwart eines Katalysators. Geeignete Katalysatoren sind beispielsweise bismuthaltige Katalysatoren, wie z.B. der Borchi^{®} Kat 22, Borchi^{®} Kat VP 0243, Borchi^{®} Kat VP 0244 der Fa. Borchers GmbH oder auch diejenigen Verbindungen, die den erfindungsgemäßen vernetzbaren Massen als Härtungskatalysatoren (E) zugesetzt werden können.

Die Herstellung der Komponenten (A) wird vorzugsweise bei Temperaturen von mindestens 0°C, besonders bevorzugt mindestens 60°C und vorzugsweise höchstens 150°C, insbesondere höchstens 120°C durchgeführt. Sie kann kontinuierlich oder diskontinuierlich erfolgen.

Vorzugsweise werden alle Komponenten zur Herstellung der Verbindungen (A) in einem Mengenverhältnis eingesetzt, nach dem auf 1 Isocyanatgruppe vorzugsweise mindestens 0,6, besonders bevorzugt mindestens 0,8 und vorzugsweise höchstens 1,4, insbesondere höchstens 1,2 isocyanatreaktive Gruppen kommen.

Die Verbindungen (A) sind bevorzugt isocyanatfrei. Die Isocyanatfreiheit kann dabei auch erreicht werden, wenn ein geringfügiger Überschuss an NCO-Gruppen bezogen auf die NCOreaktiven Gruppen eingesetzt wird, weil die überschüssigen NCO-Gruppen z.B. auch mit gebildeten Urethan- und/oder Harnstoffeinheiten unter Allophanat- bzw. Biuretbildung reagieren können.

Die erfindungsgemäß eingesetzte Komponente (A) kann nur eine Art von Verbindung der Formel (I) enthalten wie auch Gemische unterschiedlicher Arten von Verbindungen der Formel (I). Dabei kann die Komponente (A) ausschließlich Verbindungen der Formel (I) enthalten, in denen mehr als 90%, bevorzugt mehr als 95%, besonders bevorzugt mehr als 98%, aller an den Polymerrest Y gebundenen Silylgruppen identisch sind. Es kann dann aber auch eine Komponente (A) eingesetzt werden, die zumindest zum Teil Verbindungen der Formel (I) enthält, bei denen an einen Polymerrest Y unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten an Silylgruppen vorhanden sind, wobei jedoch sämtliche an jeweils einen Polymerrest Y gebundenen Silylgruppen identisch sind.

Falls es sich bei Komponente (A) um verschiedene Arten von Verbindungen der Formel (I) handelt, sind Mischungen, die sowohl Verbindungen (A1) mit Endgruppen der Formel (III) oder (IV), bei denen b = 1 und R¹ = H bedeutet und a = 0 oder 1 ist, enthalten, als auch Verbindungen (A2) mit Endgruppen der Formel (IV) oder (V), bei denen b = 3 und R¹ = H bedeutet und a = 0 ist, bevorzugt und solche besonders bevorzugt, in denen das Gewichtsverhältnis von (A1) zu (A2) 0,1 bis 10, vorzugsweise 0,2 bis 5, beträgt.

Vorzugsweise enthalten die erfindungsgemäßen Massen Verbindungen (A) in Konzentrationen von höchstens 40 Gew.-%, besonders bevorzugt höchstens 30 Gew.-%, und vorzugsweise mindestens 10 Gew.-%, besonders bevorzugt mindestens 15 Gew.-%.

Bezogen auf 100 Gewichtsteile der Komponente (A) enthalten die erfindungsgemäßen Massen vorzugsweise mindestens 60 Gewichtsteile, besonders bevorzugt mindestens 80 Gewichtsteile, insbesondere mindestens 100 Gewichtsteile, Komponente (B). Bezogen auf 100 Gewichtsteile der Komponente (A) enthalten die erfindungsgemäßen Massen vorzugsweise höchstens 1000 Gewichtsteile, besonders bevorzugt höchstens 500 Gewichtsteile, insbesondere höchstens 300 Gewichtsteile, Komponente (B).

Komponente (B) besteht vorzugsweise zu mindestens 90 Gew.-% aus Einheiten der Formel (II). Besonders bevorzugt besteht Komponente (B) ausschließlich aus Einheiten der Formel (II).

Beispiele für Reste R³ sind die oben für R angegebenen aliphatischen Beispiele. Es kann sich bei Rest R³ aber auch um zweiwertige aliphatische Reste handeln, die zwei Silylgruppen der Formel (II) miteinander verbinden, wie z.B. Alkylenreste mit 1 bis 10 Kohlenstoffatomen, wie etwa Methylen-, Ethylen-, Propylen- oder Butylenreste. Ein besonders gängiges Beispiel für einen zweiwertigen aliphatischen Rest stellt der Ethylenrest dar.

Bevorzugt handelt es sich bei Rest R³ jedoch um gegebenenfalls mit Halogenatomen substituierte, einwertige SiC-gebundene aliphatische Kohlenwasserstoffreste mit 1 bis 18 Kohlenstoffatomen, besonders bevorzugt um aliphatische Kohlenwasserstoffreste mit 1 bis 6 Kohlenstoffatomen, insbesondere um den Methylrest.

Beispiele für Rest R⁴ sind Wasserstoffatom oder die für Rest R angegebenen Beispiele.

Bevorzugt handelt es sich bei Rest R⁴ um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Beispiele für Reste R⁵ sind die oben für R angegebenen aromatischen Reste.

Bevorzugt handelt es sich bei Rest R⁵ um gegebenenfalls mit Halogenatomen substituierte, SiC-gebundene aromatische Kohlenwasserstoffreste mit 1 bis 18 Kohlenstoffatomen, wie z.B. Ethylphenyl-, Toluyl-, Xylyl-, Chlorphenyl-, Naphtyl- oder Styrylreste, besonders bevorzugt um den Phenylrest.

Bevorzugt werden als Komponenten (B) Siliconharze eingesetzt, in denen mindestens 90% aller Reste R³ für Methylrest, mindestens 90% aller Reste R⁴ für Methyl-, Ethyl-, Propyl- oder Isopropylrest und mindestens 90% aller Reste R⁵ für Phenylrest stehen.

Vorzugsweise werden erfindungsgemäß Siliconharze (B) eingesetzt, die mindestens 20%, besonders bevorzugt mindestens 40%, Einheiten der Formel (II) aufweisen, in denen c gleich 0 ist, jeweils bezogen auf die Gesamtzahl an Einheiten der Formel (II).

In einer Ausführung der Erfindung werden Siliconharze (B) eingesetzt, die, jeweils bezogen auf die Gesamtzahl an Einheiten der Formel (II), mindestens 10%, besonders bevorzugt mindestens 20%, und höchstens 80%, besonders bevorzugt höchstens 60%, Einheiten der Formel (II) aufweisen, in denen c für den Wert 2 steht.

Vorzugsweise werden Siliconharze (B) eingesetzt, die, jeweils bezogen auf die Gesamtzahl an Einheiten der Formel (II), mindestens 80%, besonders bevorzugt mindestens 95%, Einheiten der Formel (II) aufweisen, in denen d für den Wert 0 oder 1 steht.

Vorzugsweise werden Siliconharze (B) eingesetzt, die, jeweils bezogen auf die Gesamtzahl an Einheiten der Formel (II), mindestens 60%, besonders bevorzugt mindestens 70%, bevorzugt höchstens 99%, besonders bevorzugt höchstens 97%, Einheiten der Formel (II) aufweisen, in denen d für den Wert 0 steht.

Bevorzugt werden als Komponenten (B) Siliconharze eingesetzt, die, jeweils bezogen auf die Gesamtzahl an Einheiten der Formel (II), mindestens 1%, bevorzugt mindestens 10%, insbesondere mindestens 20% Einheiten der Formel (II) aufweisen, in denen e für einen Wert ungleich 0 steht. Es können Siliconharze (B) eingesetzt werden, die ausschließlich Einheiten der Formel (II) aufweisen, in denen e ungleich 0 ist, aber besonders bevorzugt weisen mindestens 10%, besonders bevorzugt mindestens 20%, bevorzugt höchstens 80%, besonders bevorzugt höchstens 60%, der Einheiten der Formel (II) ein e von 0 auf.

Vorzugsweise werden Siliconharze (B) eingesetzt, die, jeweils bezogen auf die Gesamtzahl an Einheiten der Formel (II), mindestens 20%, besonders bevorzugt mindestens 40%, Einheiten der Formel (II) aufweisen, in denen e für den Wert 1 steht. Es können Siliconharze (B) eingesetzt werden, die ausschließlich Einheiten der Formel (II) aufweisen, in denen e gleich 1 ist, aber besonders bevorzugt weisen mindestens 10%, besonders bevorzugt mindestens 20%, bevorzugt höchstens 80%, besonders bevorzugt höchstens 60%, der Einheiten der Formel (II) ein e von 0 auf.

Vorzugsweise werden Siliconharze (B) eingesetzt, die, jeweils bezogen auf die Gesamtzahl an Einheiten der Formel (II), mindestens 50% Einheiten der Formel (II) aufweisen, in denen die Summe c+e gleich 0 oder 1 ist.

In einer besonders bevorzugten Ausführung der Erfindung werden als Komponente (B) Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e für den Wert 1 und c für den Wert 0 steht. Vorzugsweise weisen dabei höchstens 70%, besonders bevorzugt höchstens 40% aller Einheiten der Formel (II) ein d ungleich 0 auf.

In einer weiteren besonders bevorzugten Ausführung der Erfindung werden als Komponente (B) Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e für den Wert 1 und c für den Wert 0 steht und die zudem mindestens 1%, bevorzugt mindestens 10%, an Einheiten der Formel (II) aufweisen, in denen c für 1 oder 2, bevorzugt für 2, und e für 0 steht. Vorzugsweise weisen dabei höchstens 70%, besonders bevorzugt höchstens 40% aller Einheiten der Formel (II) ein d ungleich 0 auf und mindestens 1% aller Einheiten der Formel (II) ein d von 0 auf.

Beispiele für die erfindungsgemäß eingesetzten Siliconharze (B) sind Organopolysiloxanharze, die im Wesentlichen, vorzugsweise ausschließlich, aus (Q)-Einheiten der Formeln SiO_{4/2}, Si(OR⁴)O_{3/2}, Si(OR⁴)₂O_{2/2} und Si (OR⁴)₃O_{1/2}, (T)-Einheiten der Formeln PhSiO_{3/2}, PhSi(OR⁴)O_{2/2} und PhSi(OR⁴)₂O_{1/2}, (D)-Einheiten der Formeln Me₂SiO_{2/2} und Me₂Si(OR⁴)O_{1/2} sowie (M)-Einheiten der Formel Me₃SiO_{1/2} bestehen, wobei Me für einen Methylrest, Ph für einen Phenylrest und R⁴ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, wobei das Harz pro Mol (T)-Einheiten bevorzugt 0-2 Mol (Q)-Einheiten, 0-2 Mol (D)-Einheiten und 0-2 Mol (M)-Einheiten enthält.

Bevorzugte Beispiele für die erfindungsgemäß eingesetzten Siliconharze (B) sind Organopolysiloxanharze, die im Wesentlichen, vorzugsweise ausschließlich, aus T-Einheiten der Formeln PhSiO_{3/2}, PhSi (OR⁴)O_{2/2} und PhSi (OR⁴)₂O_{1/2} sowie D-Einheiten der Formeln Me₂SiO_{2/2} und Me₂Si(OR⁴)O_{1/2} bestehen, wobei Me für einen Methylrest, Ph für einen Phenylrest und R⁴ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, mit einem molaren Verhältnis von (T)- zu (D)-Einheiten von 0,5 bis 2,0.

Weitere bevorzugte Beispiele für die erfindungsgemäß eingesetzten Siliconharze (B) sind Organopolysiloxanharze, die im Wesentlichen, vorzugsweise ausschließlich, aus T-Einheiten der Formeln PhSiO_{3/2}, PhSi(OR⁴)O_{2/2} und PhSi(OR⁴)₂O_{1/2} sowie T-Einheiten der Formeln MeSiO_{3/2}, MeSi(OR⁴)O_{2/2} und MeSi(OR⁴)₂O_{1/2} sowie gegebenenfalls D-Einheiten der Formeln Me₂SiO_{2/2} und Me₂Si(OR⁴)O_{1/2} bestehen, wobei Me für einen Methylrest, Ph für einen Phenylrest und R⁴ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, mit einem molaren Verhältnis von Phenylsilicon- zu Methylsilicon-Einheiten von 0,5 bis 4,0. Der Gehalt an D-Einheiten in diesen Siliconharzen liegt vorzugsweise unter 10 Gew.-%.

Zusätzliche bevorzugte Beispiele für die erfindungsgemäß eingesetzten Siliconharze (B) sind Organopolysiloxanharze, die im Wesentlichen, vorzugsweise ausschließlich, aus T-Einheiten der Formeln PhSiO_{3/2}, PhSi(OR ⁴)O_{2/2} und PhSi (OR⁴)₂O_{1/2} bestehen, wobei Ph für einen Phenylrest und R⁴ für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht. Der Gehalt an D-Einheiten in diesen Siliconharzen liegt vorzugsweise unter 10 Gew.-%.

Vorzugsweise besitzen die erfindungsgemäß eingesetzten Siliconharze (B) eine mittlere Molmasse (Zahlenmittel) Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 100 000 g/mol, insbesondere bei höchstens 50 000 g/mol.

Die erfindungsgemäß eingesetzten Siliconharze (B) können bei 23°C und 1000 hPa sowohl fest als auch flüssig sein, wobei Siliconharze (B) bevorzugt flüssig sind. Vorzugsweise besitzen die Siliconharze (B) eine Viskosität von 10 bis 100 000 mPas, vorzugsweise von 50 bis 50 000 mPas, insbesondere von 100 bis 20 000 mPas. Die Siliconharze (B) besitzen vorzugsweise ein Polydispersität (M_{w}/Mₙ) von maximal 5, bevorzugt von maximal 3.

Die Siliconharze (B) können sowohl in reiner Form als auch in Form einer Lösung in einem geeigneten Lösungsmittel eingesetzt werden.

Als Lösungsmittel können dabei Substanzen wie Ether (z.B. Diethylether, Methyl-t-butylether, Etherderivate des Glycols, THF), Ester (z.B. Ethylacetat, Butylacetat, Glycolester), Kohlenwasserstoffe (z.B. Pentan, Cyclopentan, Hexan, Cyclohexan, Heptan, Octan oder auch längerkettige verzweigte und unverzweigte Alkane), Ketone (z.B. Aceton, Methylethylketon), Aromaten (z.B. Toluol, Xylol, Ethylbenzol, Chlorbenzol) oder auch Alkohole (z.B. Methanol, Ethanol, Glycol, Propanol, iso-Propanol, Glycerin, Butanol, iso-Butanol, t-Butanol) dienen.

Vorzugsweise werden jedoch Siliconharze (B) eingesetzt, die frei von organischen Lösungsmitteln sind.

Bei den erfindungsgemäß eingesetzten Siliconharzen (B) handelt es sich um handelsübliche Produkte oder können nach in der Siliciumchemie gängigen Methoden hergestellt werden.

Zusätzlich zu den eingesetzten Komponenten (A) und (B) können die erfindungsgemäßen Massen alle weiteren Stoffe enthalten, die auch bisher in vernetzbaren Massen eingesetzt wurden und die unterschiedlich sind zu Komponenten (A) und (B), wie z.B. basischen Stickstoff aufweisende Organosiliciumverbindung (C), Füllstoffe (D), Katalysator (E), Haftvermittler (F), Wasserfänger (G), Additive (H) und Zuschlagstoffe (K).

Bevorzugt handelt es sich bei Komponente (C) um Organosiliciumverbindungen enthaltend Einheiten der Formel

DₕSi(OR⁷)_{g}R⁸_{f}O_{(4-f-g-h)/2} (IX),

worin
R⁷ gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit basischem Stickstoff bedeutet,
R⁸ gleich oder verschieden sein kann und einen einwertigen, gegebenenfalls substituierten SiC-gebundenen, von basischem Stickstoff freien organischen Rest bedeutet,
f 0, 1, 2 oder 3, bevorzugt 1 oder 0, ist,
g 0, 1, 2 oder 3, bevorzugt 1, 2 oder 3, besonders bevorzugt 2 oder 3, ist und
h 0, 1, 2, 3 oder 4, bevorzugt 1, ist,
mit der Maßgabe, dass die Summe aus f+g+h kleiner oder gleich 4 ist und pro Molekül mindestens ein Rest D anwesend ist.

In einer bevorzugten Ausführung der Erfindung enthalten die erfindungsgemäßen Massen neben den Komponenten (A) und (B) auch noch mindestens eine weitere Komponente (C) entsprechend der Formel (IX), insbesondere dann, wenn es sich bei der Komponente (A) um silanterminierte Urethane mit Endgruppen der Formel (IV) handelt. Es war überraschend, dass bei Einsatz von Komponenten (A) und (B), die in den erfindungsgemäß bevorzugten Mengenverhältnissen nicht bzw. schlecht ineinander löslich sind, durch Zusatz von Komponente (C) weitgehend homogene, vorzugsweise vollständig homogene Mischungen erzielt werden können.

Dahingegen bilden meist diejenigen erfindungsgemäßen Mischungen, die zusätzlich Komponente (C) in den unten genannten bevorzugten Mengen enthalten, vorteilhafterweise eine homogene Lösung.

Bei den erfindungsgemäß gegebenenfalls eingesetzten Organosiliciumverbindungen (C) kann es sich sowohl um Silane handeln, d.h. Verbindungen der Formel (IX) mit f+g+h=4, als auch um Siloxane, d.h. Verbindungen enthaltend Einheiten der Formel (IX) mit f+g+h≤3, wobei es sich bevorzugt um Silane handelt.

Beispiele für gegebenenfalls substituierte Kohlenwasserstoffreste R⁷ sind die für Rest R angegebenen Beispiele.

Bei den Resten R⁷ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Rest R⁸ sind die für R angegebenen Beispiele.

Bei Rest R⁸ handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₃NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂NH(CH₂)₃-, (C₄H₉)₂NH(CH₂)₃-(C₅H₁₁)₂NH(CH₂)₃-, (C₆H₁₃)₂NH(CH₂)₃-, (C₇H₁₅)₂NH(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂NH(CH₂)-, (C₄H₉)₂NH(CH₂)-, (C₅H₁₁)₂NH(CH₂)-, (C₆H₁₃)₂NH(CH₂)-, (C₇H₁₅)₂NH(CH₂)(CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- und cyclo-C₆H₁₁NH(CH₂)₃-Rest.

Beispiele für die erfindungsgemäß gegebenenfalls eingesetzten Silane der Formel (IX) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₂)₂CH₃, H₂N(CH₂)₂NH(CH₂)₃-Si(OH)₃, H₂N(CH₂)₂NH(CH₂)₃-Si(OH)₂CH)₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH (CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN(CH₂)₃-Si(OCH₃)₃)₂, HN((CH₂)₃-Si(OC₂H₅)₃)₂ HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₃)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₂NH(CH₂)₃-Si(C)CH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Die erfindungsgemäß gegebenenfalls eingesetzten OrganosiliciumVerbindungen (C) können in den erfindungsgemäßen Massen auch die Funktion eines Härtungskatalysators oder -cokatalysators übernehmen.

Des Weiteren können die erfindungsgemäß gegebenenfalls eingesetzten Organosiliciumverbindungen (C) als Haftvermittler und/oder als Wasserfänger wirken.

Die erfindungsgemäß gegebenenfalls eingesetzten Organosiliciumverbindungen (C) sind handelsübliche Produkte bzw. nach in der Chemie gängigen Verfahren herstellbar.

Falls die erfindungsgemäßen Massen Komponente (C) enthalten, handelt es sich um Mengen von bevorzugt 0,1 bis 25 Gewichtsteilen, besonders bevorzugt 0,5 bis 10 Gewichtsteilen, jeweils bezogen auf 100 Gewichtsteile Komponente (A). Die erfindungsgemäßen Massen enthalten bevorzugt Komponente (C).

Bei den in den erfindungsgemäßen Massen gegebenenfalls eingesetzten Füllstoffen (D) kann es sich um beliebige, bisher bekannte Füllstoffe handeln.

Beispiele für Füllstoffe (D) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres™ bei der Fa. 3M Deutschland GmbH in D-Neuss, elastische Kunststoffkugeln, wie etwa solche erhältlich unter der Handelsbezeichnung EXPANCEL^{®} bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (D) um Calciumcarbonat, Talkum, Aluminiumtrihydroxid sowie Kieselsäure, wobei Aluminiumtrihydroxid besonders bevorzugt wird. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (D) haben einen Feuchtigkeitsgehalt von bevorzugt unter 1 Gew.-%, besonders bevorzugt von unter 0,5 Gew.-%.

Falls die erfindungsgemäßen Massen Füllstoffe (D) enthalten, handelt es sich um Mengen von vorzugsweise 10 bis 1000 Gewichtsteilen, besonders bevorzugt 50 bis 500 Gewichtsteilen, insbesondere 80 bis 300 Gewichtsteilen, jeweils bezogen auf 100 Gewichtsteile Bestandteil (A). Die erfindungsgemäßen Massen enthalten bevorzugt Füllstoffe (D).

In einer besonderen Ausführung der Erfindung enthalten die erfindungsgemäßen Massen als Füllstoffe (D) eine Kombination aus
a) Kieselsäure, insbesondere pyrogene Kieselsäure, und
b) Calciumcarbonat, Aluminiumtrihydroxid und/oder Talkum.

Falls die erfindungsgemäßen Massen diese besondere Kombination verschiedener Füllstoffe (D) enthalten, enthalten sie vorzugsweise 1 bis 80 Gewichtsteile, besonders bevorzugt 5 bis 40 Gewichtsteile, Kieselsäure, insbesondere pyrogene Kieselsäure, und vorzugsweise 10 bis 500 Gewichtsteile, besonders bevorzugt 50 bis 300 Gewichtsteile, Calciumcarbonat, Aluminiumtrihydroxid, Talkum oder Mischungen aus diesen Materialien, jeweils bezogen auf 100 Gewichtsteile Bestandteil (A).

Bei den in den erfindungsgemäßen Massen gegebenenfalls eingesetzten Katalysatoren (E) kann es sich um beliebige, bisher bekannte Katalysatoren für durch Silankondensation härtende Massen handeln.

Beispiele für metallhaltige Härtungskatalysatoren (E) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (E) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethylphenylamin und N-Ethylmorpholinin.

Ebenfalls als Katalysator (E) können saure Verbindungen eingesetzt werden, wie Phosphorsäure and ihre Ester, Toluolsulfonsäure, Schwefelsäure, Salpetersäure oder auch organische Carbonsäuren, z.B. Essigsäure und Benzoesäure.

Falls die erfindungsgemäßen Massen Katalysatoren (E) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

In einer Ausführung der Erfindung handelt es sich bei den gegebenenfalls eingesetzten Katalysatoren (E) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90% Gew.-%, vorzugsweise zu mindestens 95 Gew.-% aus Verbindungen der Formel (I) besteht, in denen b ungleich 1 ist.

Bei den erfindungsgemäßen Massen kann vorzugsweise dann auf metallhaltige Katalysatoren (E), und insbesondere auf Zinn enthaltende Katalysatoren, verzichtet werden, wenn die Komponente (A) ganz oder zumindest teilweise, d.h. zu mindestens 10 Gew.-%, vorzugsweise zu mindestens 20 Gew.-%, aus Verbindungen der Formel (I) besteht, in denen b gleich 1 ist und R¹ die Bedeutung von Wasserstoffatom hat. Diese Ausführungsform der Erfindung ohne metall- und insbesondere ohne zinnhaltige Katalysatoren wird besonders bevorzugt.

Bei den in den erfindungsgemäßen Massen gegebenenfalls eingesetzten Haftvermittlern (F) kann es sich um beliebige, bisher für durch Silankondensation härtende Systeme beschriebene Haftvermittler handeln.

Beispiele für Haftvermittler (F) sind Epoxysilane, wie Glycidoxypropyltrimethoxysilane, Glycidoxypropylmethyldimethoxysilan, Glycidoxypropyltriethoxysilan oder Glycidoxypropyl-methyldiethoxysilan, 2-(3-Triethoxysilylpropyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilylmethyl)-harnstoff, N-(3-Triethoxysilylmethyl)-harnstoff, N-(3-Methyldiethoxysilylmethyl)harnstoff, O-Methylcarbamatomethylmethyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyl-trimethoxysilan, Methacryloxymethyl-trimethoxysilan, Methacryloxymethyl-methyldimethoxysilan, Methacryloxymethyl-triethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan und Acryloxymethyl-methyldiethoxysilan sowie deren Teilkondensate.

Falls die erfindungsgemäßen Massen Haftvermittler (F) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse.

Bei den in den erfindungsgemäßen Massen gegebenenfalls eingesetzten Wasserfängern (G) kann es sich um beliebige, für durch Silankondensation härtende Systeme beschriebene Wasserfänger handeln.

Beispiele für Wasserfänger (G) sind Silane wie Vinyltrimethoxysilan, Vinyltriethoxysilan, Vinylmethyldimethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan.

Falls die erfindungsgemäßen Massen Wasserfänger (G) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile vernetzbare Masse. Die erfindungsgemäßen Massen enthalten bevorzugt Wasserfänger (G).

Bei den in den erfindungsgemäßen Massen gegebenenfalls eingesetzten Additiven (H) kann es sich um beliebige, bisher bekannte für silanvernetzende Systeme typische Additive handeln.

Bei den erfindungsgemäß gegebenenfalls eingesetzten Additiven (H) handelt es sich bevorzugt um Antioxidantien, UV-Stabilisatoren, wie z.B. sog. HALS-Verbindungen, Fungizide und Pigmente.

Falls die erfindungsgemäßen Massen Additive (H) enthalten, handelt es sich um Mengen von vorzugsweise 0,01 bis 30 Gewichtsteilen, besonders bevorzugt 0,1 bis 10 Gewichtsteilen, jeweils bezogen auf 100 Gewichtsteile Bestandteil (A). Die erfindungsgemäßen Massen enthalten bevorzugt Additive (H).

Bei den erfindungsgemäß gegebenenfalls eingesetzten Zuschlagsstoffen (K) handelt es sich bevorzugt um Tetraalkoxysilane, z.B. Tetraethoxysilan und/oder deren Teilkondensate, Weichmacher, Reaktivweichmacher, Rheologieadditive, Flammschutzmittel und organische Lösungsmittel.

Beispiele für Weichmachern (K) sind Phthalsäureester (z.B. Dioctylphthalat, Diisooctylphthalat und Diundecylphthalat), perhydrierte Phthalsäureester (z.B. 1,2-Cyclohexandicarbonsäurediisononylester und 1,2-Cyclohexandicarbonsäuredioctylester), Adipinsäureester (z.B. Dioctyladipat), Benzoesäureester, Glycolester, Ester gesättigter Alkandiole (z.B. 2,2,4-Trimethyl-1,3-pentandiolmonoisobutyrate und 2,2,4-Trimethyl-1,3-pentandioldiisobutyrate), Phosphorsäureester, Sulfonsäureester, Polyester, Polyether (z.B. Polyethylenglycole und Polypropylenglycole mit Molmassen von vorzugsweise 1000 bis 10 000 Dalton), Polystyrole, Polybutadiene, Polyisobutylene, paraffinische Kohlenwasserstoffe und hochmolekulare, verzweigte Kohlenwasserstoffe, wobei bevorzugte keine Weichmacher (K) eingesetzt werden.

Beispiele für Reaktivweichmacher (K) sind solche der Formel

R¹⁰ₘSi(OR⁹)ₗR¹¹ₖO_{(4-k-l-m)/2} (X),

worin
R⁹ gleich oder verschieden sein kann und Wasserstoffatom oder gegebenenfalls substituierte Kohlenwasserstoffreste bedeutet,
R¹⁰ gleich oder verschieden sein kann und einen einwertigen, gegebenenfalls substituierten SiC-gebundenen Kohlenwasserstoffrest mit 3 bis 40 Kohlenstoffatmen bedeutet,
R¹¹ gleich oder verschieden sein kann und einen einwertigen, gegebenenfalls substituierten SiC-gebundenen, Kohlenwasserstoffrest mit 1 oder 2 Kohlenstoffatomen bedeutet,
k 0, 1, 2 oder 3, bevorzugt 0 oder 1, ist,
l 0, 1, 2 oder 3, bevorzugt 2 oder 3, besonders bevorzugt 3, ist und
m 0, 1, 2, 3 oder 4, bevorzugt 1 ist,
mit der Maßgabe, dass die Summe aus k+l+m kleiner oder gleich 4 ist und pro Molekül mindestens ein Rest R¹⁰ anwesend ist.

Beispiele für gegebenenfalls substituierte Kohlenwasserstoffreste R⁹ sind die für Rest R angegebenen Beispiele.

Bei den Resten R⁹ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für gegebenenfalls substituierte Kohlenwasserstoffreste R¹⁰ sind die für Rest R angegebenen Beispiele für Kohlenwasserstoffreste mit mindestens 3 Kohlenstoffatomen.

Bevorzugt weist Rest R¹⁰ eine gerade Anzahl an Kohlenstoffatomen auf.

Bevorzugt handelt es sich bei Rest R¹⁰ um Kohlenwasserstoffreste mit 6 bis 40 Kohlenstoffatomen, besonders bevorzugt um den Hexyl-, iso-Hexyl-, iso-Octyl-, Octyl-, Decyl-, Dodecyl-, Tetradecyl- und den Hexadecylrest, ganz besonders bevorzugt um den Hexadecylrest.

Beispiele für die erfindungsgemäß gegebenenfalls eingesetzten Organosiliciumverbindungen (K) der Formel (X) sind Isooctyltrimethoxysilan, Isooctyltriethoxysilan, N-Octyltrimethoxysilan, N-Octyltriethoxysilan, Decyltrimethoxysilane, Decyltriethoxysilan, Dodecyltrimethoxysilan, Dodecyltriethoxysilan, Tetradecyltrimethoxysilan, Tetradecyltriethoxysilan, Hexadecyltrimethoxysilan sowie Hexadecyltriethoxysilan.

Bevorzugt handelt es sich bei Rest R¹¹ um den Methylrest.

Die erfindungsgemäß gegebenenfalls eingesetzten Organosiliciumverbindungen (K) der Formel (X) sind handelsübliche Produkte bzw. nach in der Chemie gängigen Verfahren herstellbar.

Bei den Rheologieadditiven (K) handelt es sich bevorzugt um Polyamidwachse, hydrierte Rizinusöle oder Stearate.

Beispiele für organische Lösungsmittel (K) sind die bereits oben als Lösungsmittel genannten Verbindungen, bevorzugt Alkohole.

Den erfindungsgemäßen Massen werden vorzugsweise keine organischen Lösungsmitteln (K) zugesetzt.

Falls die erfindungsgemäßen Massen eine oder mehrere Komponenten (K) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Bei den erfindungsgemäßen Massen handelt es sich bevorzugt um solche enthaltend
(A) 100 Gewichtsteile Verbindungen der Formel (I),
(B) 60 bis 1000 Gewichtsteile Siliconharze enthaltend Einheiten der Formel (II),
   gegebenenfalls
(C) 0,5 bis 10 Gewichtsteile basischen Stickstoff aufweisende Verbindung,
   gegebenenfalls
(D) Füllstoffe,
   gegebenenfalls
(E) Katalysatoren,
   gegebenenfalls
(F) Haftvermittler,
   gegebenenfalls
(G) Wasserfänger,
   gegebenenfalls
(H) Additive und
   gegebenenfalls
(K) Zuschlagstoffe.

Die erfindungsgemäßen Massen enthalten außer den Komponenten (A) bis (K) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Massen handelt es sich bevorzugt um Formulierungen mit Viskositäten von bevorzugt 500 bis 1 000 000 mPas, besonders bevorzugt von 1 000 bis 500 000 mPas, insbesondere 1 000 bis 20 000 mPas, jeweils bei 25°C.

Die Herstellung der erfindungsgemäßen Massen kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Ein weiterer Gegenstand der vorliegenden Erfindung ist ein Verfahren zur Herstellung der erfindungsgemäßen Zusammensetzung durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich oder diskontinuierlich durchgeführt werden.

Bei den erfindungsgemäßen Massen handelt es sich bevorzugt um einkomponentige, unter Ausschluss von Wasser lagerfähige, bei Zutritt von Wasser bei Raumtemperatur vernetzbare Massen. Die erfindungsgemäßen Massen können aber auch Teil von zweikomponentigen Vernetzungssystemen sein, bei denen in einer zweiten Komponente OH-haltige Verbindungen, wie Wasser, hinzugefügt werden.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels den normalen Wassergehalt der Luft übersteigenden Konzentrationen von Wasser durchgeführt werden. Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der Erfindung sind Formkörper hergestellt durch Vernetzung der erfindungsgemäßen Massen. Bei den erfindungsgemäßen Formkörpern kann es sich um beliebige Formkörper handeln, wie etwa Dichtungen, Preßartikel, extrudierte Profile, Beschichtungen, Imprägnierungen, Verguss, Linsen, Prismen, polygone Strukturen, Laminat- oder Klebschichten.

Die erfindungsgemäßen Massen sind nach dem Aushärten sehr zugscherfest mit Zugscherfestigkeiten gemessen nach DIN EN 204 nach 7-tägiger Lagerung bei Normklima, also bei 1000 hPa und 23°C, von mindestens 7 MPa, bevorzugt mindestens 8 MPa und besonders bevorzugt mindestens 10 MPa aufweisen.

Sie werden vorzugsweise als Klebstoffe eingesetzt, die nach dem Aushärten eine Zugscherfestigkeit von mindestens 7 MPa, bevorzugt mindestens 8 MPa und besonders bevorzugt mindestens 10 MPa aufweisen. Bevorzugt werden sie zum Verkleben von Holz eingesetzt, d.h. bei Verklebungen, bei denen mindestens eines der zu verklebenden Substrate - vorzugsweise beide zu verklebenden Substrate - aus Holz sind. Die erfindungsgemäßen Massen sind dabei zum Verkleben jedweder Holztypen geeignet. Besonders bevorzugt werden sie für Verklebungen eingesetzt die nach der Aushärtung die DIN EN 204 D1-, D2-, D3- und/oder D4-Normen erfüllen.

Ein weiterer Gegenstand der Erfindung ist ein Verfahren zur Verklebung oder Abdichtung von Substraten, bei denen die erfindungsgemäße Masse auf die Oberfläche mindestens eines Substrates aufgebracht, diese Oberfläche dann mit dem zu verklebenden zweiten Substrat in Kontakt gebracht und anschließend vernetzen gelassen wird.

Beispiele für Substrate, die erfindungsgemäß verklebt oder abgedichtet werden können, sind insbesondere Holz aber auch Kunststoffe inkl. PVC, Beton, mineralische Untergründe, Metalle, Glas, Keramik und lackierte Oberflächen. Dabei können sowohl gleiche als auch unterschiedliche Materialen miteinander verklebt werden.

Bevorzugt handelt es sich bei den erfindungsgemäß eingesetzten Substraten um Holz.

Ein weiterer Gegenstand der Erfindung ist ein Verfahren zur Herstellung von Beschichtungen oder Vergüssen, bei denen die erfindungsgemäße Masse auf mindestens ein Substrat aufgebracht und anschließend vernetzen gelassen wird.

Beispiele hierfür sind Vergussmassen für LEDs oder sonstige elektronische Bauteile, die Herstellung von Formartikeln, Verbundmaterialien und Verbundformteile. Unter Verbundformteilen soll hier ein einheitlicher Formartikel aus einem Verbundmaterial verstanden werden, der aus einem Vernetzungsprodukt der erfindungsgemäßen Massen und mindestens einem Substrat so zusammengesetzt ist, dass zwischen den beiden Teilen eine feste, dauerhafte Verbindung besteht.

Die erfindungsgemäßen Massen haben den Vorteil, dass sie leicht herzustellen sind.

Die erfindungsgemäßen vernetzbaren Massen haben den Vorteil, dass sie sich durch eine sehr hohe Lagerstabilität und eine hohe Vernetzungsgeschwindigkeit auszeichnen.

Ferner haben die erfindungsgemäßen vernetzbaren Massen den Vorteil, dass sie ein ausgezeichnetes Haftungsprofil aufweisen.

Des Weiteren haben die erfindungsgemäßen vernetzbaren Massen den Vorteil, dass leicht zu verarbeiten sind.

Des Weiteren haben die erfindungsgemäßen vernetzbaren Massen den Vorteil, dass daraus Klebstoffe mit hoher Zugscherfestigkeit erhalten werden können.

Ein weiterer Vorteil der erfindungsgemäßen Massen liegt in der Option, durch Wahl einer niederviskosen Komponente (B) Massen mit einer niedrigen Viskosität, d.h. einer sehr guten Verarbeitbarkeit, zu erhalten, ohne dass man zu diesem Zweck große Mengen oftmals unerwünschter Lösungsmittel und/oder Weichmacher zusetzen muss.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiel 1

### Herstellung einer 1K-Klebstoffformulierung

100 g silanterminiertes Polypropylenglycol mit einer mittleren Molmasse (Mₙ) von 12000 Dalton und Endgruppen der Formel -O-C(=O)-NH-CH₂-SiCH₃(OCH₃)₂ (käuflich erhältlich unter der Bezeichnung GENIOSIL^{®} STP-E10 bei der Fa. Wacker Chemie AG, D-München) werden in einem Laborplanetenmischer der Fa. PC-Laborsystem, ausgestattet mit zwei Balkenmischern, bei ca. 25°C mit 150 g eines lösungsmittelfreien, flüssigen Phenylsiliconharzes, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES^{®} IC 368 bei der Wacker Chemie AG, D-München), und 2,5 g Stabilisator (käuflich erhältlich unter der Bezeichnung TINUVIN^{®} 123 bei der BASF AG, Deutschland; CAS-NR: 129757-67-1) für 2 Minuten bei 200 U/min homogenisiert. Danach werden 242,5 g Aluminiumtrihydroxid mit einer BET-Oberfläche von 3-5 m²/g und einem d50-Wert von 1,7-2,1 µm (käuflich erhältlich unter der Bezeichnung "Martinal OL 104" bei der Fa. Albemarle Corp.) unter Rühren eine Minute bei 600 U/min aufgeschlossen. Nach Einarbeitung des Aluminiumtrihydroxids werden 7,5 g *N*-(2-Amincethyl)-3-aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die Formulierung wird in 310 ml PE-Kartuschen abgefüllt und einen Tag bei 25°C vor der Untersuchung gelagert.

### Beispiel 2

### Herstellung einer 1K-Klebstoffformulierung

125 g silanterminiertes Polypropylenglycol mit einer mittleren Molmasse (Mₙ) von 12000 Dalton und Endgruppen der Formel -O-C(=O)-NH-CH₂-SiCH₃(OCH₃)₂ (käuflich erhältlich unter der Bezeichnung GENIOSIL^{®} STP-E10 bei der Fa. Wacker Chemie AG, D-München) werden in einem Laborplanetenmischer der Fa. PC-Laborsystem, ausgestattet mit zwei Balkenmischern, bei ca. 25°C mit 125 g eines lösungsmittelfreien, flüssigen Phenylsiliconharzes, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES^{®} IC 368 bei der Wacker Chemie AG, D-München), und 2,5 g Stabilisator (käuflich erhältlich unter der Bezeichnung TINUVIN^{®} 123 bei der BASF AG, Deutschland; CAS-NR: 129757-67-1) für 2 Minuten bei 200 U/min homogenisiert. Danach werden 242,5 g Aluminiumtrihydroxid mit einer BET-Oberfläche von 3-5 m²/g und einem d50-Wert von 1,7-2,1 µm (käuflich erhältlich unter der Bezeichnung "Martinal OL 104" bei der Fa. Albemarle Corp.) unter Rühren eine Minute bei 600 U/min aufgeschlossen. Nach Einarbeitung des Aluminiumtrihydroxids werden 7,5 g N-(2-Aminoethyl)-3-aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die Formulierung wird in 310 ml PE-Kartuschen abgefüllt und einen Tag bei 25°C vor der Untersuchung gelagert.

### Vergleichsbeispiel 1

### Herstellung einer 1K-Klebstoffformulierung

75 g silanterminiertes Polypropylenglycol mit einer mittleren Molmasse (Mₙ) von 12000 Dalton und Endgruppen der Formel -O-C(=O)-NH-CH₂-SiCH₃(OCH₃)₂ (käuflich erhältlich unter der Bezeichnung GENIOSIL^{®} STP-E10 bei der Fa. Wacker Chemie AG, D-München) und 50 g silanterminiertes Polypropylenglycol mit einer mittleren Molmasse (Mₙ) von 12000 Dalton und Endgruppen der Formel -O-C(=O)-NH-(CH₂)₃-Si(OCH₃) (käuflich erhältlich unter der Bezeichnung GENIOSIL^{®} STP-E15 bei der Fa. Wacker Chemie AG, D-München) werden vermischt und in einem Laborplanetenmischer der Fa. PC-Laborsystem, ausgestattet mit zwei Balkenmischern, bei ca. 25°C mit 7,5 g Vinyltrimethoxysilan, 45 g eines lösungsmittelfreien, flüssigen Phenylsiliconharzes, das aus phenylfunktionellen T-Einheiten (50-75 Mol-%) und dimethylfunktionellen D-Einheiten (25-50 Mol-%) zusammengesetzt ist und einen Gehalt an Alkoxygruppen von 10-30 Gew.-% aufweist (käuflich erhältlich unter der Bezeichnung SILRES^{®} SY 231 bei der Wacker Chemie AG, D-München), 2,5 g Vernetzungskatalysator (Metatin 740) und 2,5 g Stabilisator (käuflich erhältlich unter der Bezeichnung TINUVIN^{®} 123 bei der BASF AG, Deutschland; CAS-NR: 129757-67-1) für 2 Minuten bei 200 U/min homogenisiert. Danach werden 155 g Kreide mit einer BET-Oberfläche von 15 m²/g und einem d50-Wert von 0,45 µm (käuflich erhältlich unter der Bezeichnung "Socal U1S2" bei der Fa. Solvay) und 155 g Kreide mit einer BET-Oberfläche von 3 m²/g und einem d50-Wert von 0,45 µm (käuflich unter der Bezeichnung "Imerseal 50" bei der Fa. I-merys) unter Rühren eine Minute bei 600 U/min aufgeschlossen. Nach Einarbeitung der Kreide werden 10 g Aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die Formulierung wird in 310 ml PE-Kartuschen abgefüllt und einen Tag bei 25°C vor der Untersuchung gelagert.

### Beispiel 3

Die Bestimmung der Zugscherfestigkeiten der Klebstoffformulierungen aus den Beispielen 1 und 2 sowie dem Vergleichsbeispiel 1 erfolgt wie in der DIN EN 204 beschrieben. Hierbei erfolgt ein Auftrag des Klebstoffes auf beide zu verklebenden Buchenhölzer, welche dann mit einem 100 µm Rakel abgezogen werden. Anschließend erfolgt das Verbinden der beiden Hölzer über eine Fläche von 1 mal 2 cm mit einem Anpressdruck von 5kg. Nach dem Anpressen von 24 Stunden werden die Hölzer im Normklima für den angegebenen Zeitraum gelagert. Bei der Bestimmung des D1-Wertes wird die Zugscherfestigkeit der beiden verklebten Hölzer direkt nach der Lagerung gemessen. Bei der D4-Messung erfolgt nach dem Lagerzeitraum eine zusätzliche Lagerung für sechs Stunden im Kochwasser. Anschließend werden die Hölzer aus dem Wasser herausgenommen, abgetrocknet und eine Stunde bei Raumtemperatur gelagert. Anschließend erfolgt die Bestimmung der Zugscherfestigkeit. Es werden die in Tabelle 1 angegebenen Werte erzielt:

**Tabelle 1**

| | Zugscherfestigkeit [MPa] | | |
|---|---|---|---|
| Lagerbedingungen | Beispiel 1 | Beispiel 2 | Vergleichsbeispiel 1 |
| D1 (7 Tage Normklima) | 11,9 | 11,5 | 3,9 |
| D4 (21 Tage Normklima, 6 h Kochwasser) | 3,8 | 3,9 | 0,8 |

### Beispiel 4

### Herstellung eines silanterminierten Polyurethans

In einem 6000 ml Reaktionsgefäß mit Rühr-, Kühl- und Heizmöglichkeiten werden 1098 g (6305 mmol) Toluen-2,4-diisocyanat (TDI) vorgelegt und auf 60°C erwärmt. Dann wird eine Mischung aus 207 g (854 mmol) Hexadecylalkohol und 1248 g (2936 mmol) eines Polypropylenglycols mit einer mittleren Molmasse von 425 g/mol zugegeben. Die Temperatur der Reaktionsmischung steigt nicht über 80°C an. Anschließend wird für 60 min bei 60°C nachgerührt.

Anschließend kühlt man auf etwa 50°C ab und gibt 75 ml Vinyltrimethoxysilan hinzu. Danach werden 4,2 g einer Katalysatorformulierung enthaltend 2,2'-Dimorpholinodiethylether (käuflich erhältlich unter der Bezeichnung Jeffcat^{®} DMDLS der Fa. Huntsman) und 1200 g (567,8 mmol) *N*-Phenylaminomethyl-methyldimethoxysilan (käuflich erhältlich unter der Bezeichnung GENIOSIL^{®} XL 972 bei der Wacker Chemie AG, D-München) hinzugegeben, wobei die Temperatur nicht auf über 80°C ansteigt. Danach wird für weitere 60 min bei 60°C nachgerührt. In der resultierenden Prepolymermischung lassen sich IR-spektroskopisch keine Isocyanatgruppen mehr nachweisen. Man erhält eine klare, durchsichtige Prepolymermischung, die bei 50°C eine Viskosität von 13,5 Pas aufweist. Sie lässt sich problemlos weiterverarbeiten.

### Herstellung einer 1K-Klebstoffformulierung

210 g des oben hergestellten silanterminierten Polyurethans und 25 g silanterminiertes Polypropylenglycol mit einer mittleren Molmasse (Mₙ) von 12000 Dalton und Endgruppen der Formel -O-C(=O)-NH-(CH₂)₃-Si(OCH₃)₃ (käuflich erhältlich unter der Bezeichnung GENIOSIL^{®} STP-E15 bei der Fa. Wacker Chemie AG, D-München) werden in einem Laborplanetenmischer der Fa. PC-Laborsystem, ausgestattet mit zwei Balkenmischern, bei ca. 25°C mit 245 g eines lösungsmittelfreien, flüssigen Phenylsiliconharzes, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES^{®} IC 368 bei der Wacker Chemie AG, D-München), 10 g Vinyltrimethoxysilan und 2,5 g Stabilisator (käuflich erhältlich unter der Bezeichnung TINUVIN^{®} 123 bei der BASF AG, Deutschland; CAS-NR: 129757-67-1) für 2 Minuten bei 200 U/min homogenisiert. Danach werden 10 g 3-Aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die Formulierung besitzt eine Viskosität von 17 Pas bei 25°C. Sie wird in 310 ml PE-Kartuschen abgefüllt und einen Tag bei 25°C vor der Untersuchung gelagert.

### Vergleichsbeispiel 2

### Herstellung einer 1K-Klebstoffformulierung

340 g silanterminiertes Polyurethan aus Beispiel 4 und 25 g silanterminiertes Polypropylenglycol mit einer mittleren Molmasse (Mₙ) von 12000 Dalton und Endgruppen der Formel -O-C(=O)-NH-(CH₂)₃-Si(OCH₃)₃ (käuflich erhältlich unter der Bezeichnung GENIOSIL^{®} STP-E15 bei der Fa. Wacker Chemie AG, D-München) werden in einem Laborplanetenmischer der Fa. PC-Laborsystem, ausgestattet mit zwei Balkenmischern, bei ca. 25°C mit 100 g eines lösungsmittelfreien, flüssigen Phenylsiliconharzes, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES^{®} IC 368 bei der Wacker Chemie AG, D-München), 10 g Vinyltrimethoxysilan und 2,5 g Stabilisator (käuflich erhältlich unter der Bezeichnung TINUVIN^{®} 123 bei der BASF AG, Deutschland; CAS-NR: 129757-67-1) für 2 Minuten bei 200 U/min homogenisiert. Danach werden 10 g 3-Aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die Formulierung ist mit einer Viskosität von 51 Pas bei 25°C sehr zäh und nur vergleichsweise schlecht handhabbar. Sie wird in 310 ml PE-Kartuschen abgefüllt und einen Tag bei 25°C vor der Untersuchung gelagert.

### Beispiel 5

Die Bestimmung der Zugscherfestigkeiten der Klebstoffformulierungen aus dem Beispiel 4 sowie dem Vergleichsbeispiel 2 erfolgt wie in der DIN EN 204 beschrieben. Hierbei erfolgt ein Auftrag des Klebstoffes auf beide zu verklebenden Buchenhölzer, welche dann mit einem 100 µm Rakel abgezogen werden. Anschließend erfolgt das Verbinden der beiden Hölzer über eine Fläche von 1 mal 2 cm mit einem Anpressdruck von 5kg. Nach dem Anpressen von 24 Stunden werden die Hölzer im Normklima für den angegebenen Zeitraum gelagert. Bei der Bestimmung des D1-Wertes wird die Zugscherfestigkeit der beiden verklebten Hölzer direkt nach der Lagerung gemessen. Bei der D4-Messung erfolgt nach dem Lagerzeitraum eine zusätzliche Lagerung für sechs Stunden im Kochwasser. Anschließend werden die Hölzer aus dem Wasser herausgenommen, abgetrocknet und eine Stunde bei Raumtemperatur gelagert. Anschließend erfolgt die Bestimmung der Zugscherfestigkeit. Es werden die in Tabelle 2 angegebenen Werte erzielt:

**Tabelle 2**

| | Zugscherfestigkeit [MPa] | |
|---|---|---|
| Lagerbedingungen | Beispiel 4 | Vergleichsbeispiel 2 |
| D1 (7 Tage Normklima) | 16,1 | 14,3 |
| D4 (21 Tage Normklima, 6 h Kochwasser) | 6,1 | 2,1 |

### Beispiel 6

### Herstellung einer 1K-Klebstoffformulierung

100 g silanterminiertes Polypropylenglycol mit einer mittleren Molmasse (Mₙ) von 12000 Dalton und Endgruppen der Formel -O-C(=O)-NH-CH₂-SiCH₃(OCH₃)₂ (käuflich erhältlich unter der Bezeichnung GENIOSIL^{®} STP-E10 bei der Fa. Wacker Chemie AG, D-München) werden in einem Laborplanetenmischer der Fa. PC-Laborsystem, ausgestattet mit zwei Balkenmischern, bei ca. 25°C mit 387,5 g eines lösungsmittelfreien, flüssigen Phenylsiliconharzes, das ausschließlich aus phenylfunktionellen T-Einheiten zusammengesetzt ist, einen Gehalt an Methoxygruppen von 10-30 Gew.-% und eine mittlere Molmasse von 1000-2000 Dalton aufweist (käuflich erhältlich unter der Bezeichnung SILRES^{®} IC 678 bei der Wacker Chemie AG, D-München), und 2,5 g Stabilisator (käuflich erhältlich unter der Bezeichnung TINUVIN^{®} 123 bei der BASF AG, Deutschland; CAS-NR: 129757-67-1) für 2 Minuten bei 200 U/min homogenisiert. Danach werden 11,5 g *N*-(2-Aminoethyl)-3-aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die Formulierung besitzt eine Viskosität von 1,0 Pas bei 25°C. Sie wird in 310 ml PE-Kartuschen abgefüllt und einen Tag bei 25°C vor der Untersuchung gelagert.

### Beispiel 7

### Herstellung einer 1K-Klebstoffformulierung

150 g silanterminiertes Polypropylenglycol mit einer mittleren Molmasse (Mₙ) von 12000 Dalton und Endgruppen der Formel -O-C(=O)-NH-CH₂-SiCH₃(OCH₃)₂ (käuflich erhältlich unter der Bezeichnung GENIOSIL^{®} STP-E10 bei der Fa. Wacker Chemie AG, D-München) werden in einem Laborplanetenmischer der Fa. PC-Laborsystem, ausgestattet mit zwei Balkenmischern, bei ca. 25°C mit 337,5 g eines lösungsmittelfreien, flüssigen Phenylsiliconharzes, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES^{®} IC 368 bei der Wacker Chemie AG, D-München), und 2,5 g Stabilisator (käuflich erhältlich unter der Bezeichnung TINUVIN^{®} 123 bei der BASF AG, Deutschland; CAS-NR: 129757-67-1) für 2 Minuten bei 200 U/min homogenisiert. Danach werden 12,5 g *N*-(2-Aminoethyl)-3-aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die Formulierung besitzt eine Viskosität von 1,6 Pas bei 25°C. Sie wird in 310 ml PE-Kartuschen abgefüllt und einen Tag bei 25°C vor der Untersuchung gelagert.

### Beispiel 8

### Herstellung einer 1K-Klebstoffformulierung

250 g silanterminiertes Polypropylenglycol mit einer mittleren Molmasse (Mₙ) von 12000 Dalton und Endgruppen der Formel -O-C(=O)-NH-CH₃-SiCH₃(OCH₃)₂ (käuflich erhältlich unter der Bezeichnung GENIOSIL^{®} STP-E10 bei der Fa. Wacker Chemie AG, D-München) werden in einem Laborplanetenmischer der Fa. PC-Laborsystem, ausgestattet mit zwei Balkenmischern, bei ca. 25°C mit 237,5 g eines lösungsmittelfreien, flüssigen Phenylsiliconharzes, das aus phenylfunktionellen T-Einheiten (60-65 Gew.-%) und methylfunktionellen T-Einheiten (18-22 Gew.-%) und dimethylfunktionellen D-Einheiten (2-4 Gew.-%) zusammengesetzt ist, einen Gehalt an Methoxygruppen von 12-16 Gew.-% und eine mittlere Molmasse von 800-1300 Dalton aufweist (käuflich erhältlich unter der Bezeichnung SILRES^{®} IC 368 bei der Wacker Chemie AG, D-München), und 2,5 g Stabilisator (käuflich erhältlich unter der Bezeichnung TINUVIN^{®} 123 bei der BASF AG, Deutschland; CAS-NR: 129757-67-1) für 2 Minuten bei 200 U/min homogenisiert. Danach werden 12,5 g *N*-(2-Aminoethyl)-3-aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Die Formulierung besitzt eine Viskosität von 2,9 Pas bei 25°C. Sie wird in 310 ml PE-Kartuschen abgefüllt und einen Tag bei 25°C vor der Untersuchung gelagert.

### Beispiel 9

Die Bestimmung der Zugscherfestigkeiten der Klebstoffformulierungen aus den Beispielen 6, 7 und 8 erfolgt wie in der DIN EN 204 beschrieben. Hierbei erfolgt ein Auftrag des Klebstoffes auf beide zu verklebenden Buchenhölzer, welche dann mit einem 100 µm Rakel abgezogen werden. Anschließend erfolgt das Verbinden der beiden Hölzer über eine Fläche von 1 mal 2 cm mit einem Anpressdruck von 5kg. Nach dem Anpressen von 24 Stunden werden die Hölzer im Normklima für den angegebenen Zeitraum gelagert. Bei der Bestimmung des D1-Wertes wird die Zugscherfestigkeit der beiden verklebten Hölzer direkt nach der Lagerung gemessen. Bei der D4-Messung erfolgt nach dem Lagerzeitraum eine zusätzliche Lagerung für sechs Stunden im Kochwasser. Anschließend werden die Hölzer aus dem Wasser herausgenommen, abgetrocknet und eine Stunde bei Raumtemperatur gelagert. Anschließend erfolgt die Bestimmung der Zugscherfestigkeit. Es werden die in Tabelle 3 angegebenen Werte erzielt:

**Tabelle 3**

| | Zugscherfestigkeit [MPa] | | |
|---|---|---|---|
| Lagerbedingungen | Beispiel 6 | Beispiel 7 | Beispiel 8 |
| D1 (7 Tage Normklima) | 10,2 | 10,1 | 10,3 |
| D4 (21 Tage Normklima, 6 h Kochwasser) | 4,4 | 4,1 | 3,2 |

## Patentansprüche

1. Vernetzbare Massen enthaltend
(A) 100 Gewichtsteile Verbindungen (A) der Formel
Y- [(CR¹₂)_{b}-SiRₐ(OR²)₃₋ₐ]ₓ (I),
wobei
Y einen x-wertigen, über Stickstoff, Sauerstoff, Schwefel oder Kohlenstoff gebundenen organischen Polymerrest bedeutet, der als Polymerkette Polyoxyalkylen, Kohlenwasserstoffpolymer, Polyurethan, Polyester, Polyamid, Polyacrylat, Polymethacrylat oder Polycarbonat enthält,
R gleich oder verschieden sein kann und einen einwertigen, gegebenenfalls substituierten, SiC-gebundenen Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist, und
(B) mehr als 50 Gewichtsteile Siliconharze enthaltend Einheiten der Formel
R³_{c}(R⁴O)dR⁵ₑSiO_{(4-c-d-e)/2} (II),
wobei
R³ gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
R⁴ gleich oder verschieden sein kann und Wasserstoffatom oder einen einwertigen, gegebenenfalls substituierten Kohlenwasserstoffrest bedeutet,
R⁵ gleich oder verschieden sein kann und einen einwertigen, SiC-gebundenen, gegebenenfalls substituierten aromatischen Kohlenwasserstoffrest bedeutet,
c 0, 1, 2 oder 3 ist,
d 0, 1, 2 oder 3 ist und
e 0, 1 oder 2 ist,
mit der Maßgabe, dass die Summe aus c+d+e kleiner oder gleich 3 ist und in mindestens 40 % der Einheiten der Formel (II) die Summe c+e gleich 0 oder 1 ist
ausgenommen Zusammensetzung erhältlich durch Vermischen in einem geeigneten Mischgerät von 20,0 g GENIOSIL^{®} STP-E10 (käuflich erwerblich bei Wacker Chemie AG), 10,0 g GENIOSIL^{®} STP-E15 (käuflich erwerblich bei Wacker Chemie AG), 23,5 g Siliconharz (SILRES^{®} SY 231; käuflich erwerblich bei Wacker Chemie AG), 2,0 g Vinyltrimethoxysilan, 1,0 g Hydrophobe Kieselsäure (HDK^{®} H2000; käuflich erwerblich bei Wacker Chemie AG), 20,5 g Aluminiumtrihydrat (ATH), 21,0 g Talkum und 2,0 g 3-Aminopropyltrimethoxysilan.

2. Vernetzbare Massen gemäß Anspruch 1, **dadurch gekennzeichnet, dass** es sich bei Rest Y in Formel (I) um Polyurethanreste und Polyoxyalkylenreste handelt.

3. Vernetzbare Massen gemäß Anspruch 1 oder 2, **dadurch gekennzeichnet, dass** es sich bei den Endgruppen der Verbindungen (A) um solche der allgemeinen Formeln
-O-C(=O)-NH-(CR¹₂)_{b}-SiRₐ(OR²)₃₋ₐ (III)
und
-NH-C(=O)-NR'-(CR¹₂)_{b}-SiRₐ(OR²)₃₋ₐ (IV)
handelt, wobei die Reste und Indizes eine der oben dafür angegebenen Bedeutungen haben.

4. Vernetzbare Massen gemäß einem oder mehreren der Ansprüche 1 bis 3, **dadurch gekennzeichnet, dass** sie bezogen auf 100 Gewichtsteile der Komponente (A) mindestens 60 Gewichtsteile Komponente (B) enthalten.

5. Vernetzbare Massen gemäß einem oder mehreren der Ansprüche 1 bis 4, **dadurch gekennzeichnet, dass** die Siliconharze (B) eine mittlere Molmasse (Zahlenmittel) Mₙ von mindestens 400 g/mol und höchstens 400 000 g/mol aufweisen.

6. Vernetzbare Massen gemäß einem oder mehreren der Ansprüche 1 bis 5, **dadurch gekennzeichnet, dass** es sich um solche handelt enthaltend
(A) 100 Gewichtsteile Verbindungen der Formel (I),
(B) 60 bis 1000 Gewichtsteile Siliconharze enthaltend Einheiten der Formel (II),
gegebenenfalls
(C) 0,5 bis 10 Gewichtsteile basischen Stickstoff aufweisende Verbindung,
gegebenenfalls
(D) Füllstoffe,
gegebenenfalls
(E) Katalysatoren,
gegebenenfalls
(F) Haftvermittler,
gegebenenfalls
(G) Wasserfänger,
gegebenenfalls
(H) Additive und
gegebenenfalls
(K) Zuschlagstoffe.

7. Verfahren zur Herstellung der Zusammensetzung gemäß einem oder mehreren der Ansprüche 1 bis 6 durch Mischen der einzelnen Komponenten in beliebiger Reihenfolge.

8. Formkörper, hergestellt durch Vernetzung der Massen gemäß einem oder mehreren der Ansprüche 1 bis 6 oder hergestellt nach Anspruch 7.

9. Formkörper gemäß Anspruch 8, **dadurch gekennzeichnet, dass** sie eine Zugscherfestigkeit gemessen nach DIN EN 204 nach 7-tägiger Lagerung bei Normklima, also bei 1000 hPa und 23°C, von mindestens 7 MPa aufweisen.

10. Verfahren zur Verklebung oder Abdichtung von Substraten, bei denen die Massen gemäß einem oder mehreren der Ansprüche 1 bis 6 oder hergestellt nach Anspruch 7 auf die Oberfläche mindestens eines Substrates aufgebracht, diese Oberfläche dann mit dem zu verklebenden zweiten Substrat in Kontakt gebracht und anschließend vernetzen gelassen wird.

11. Verfahren zur Herstellung von Beschichtungen oder Vergüssen, bei denen die Massen gemäß einem oder mehreren der Ansprüche 1 bis 6 oder hergestellt nach Anspruch 7 auf mindestens ein Substrat aufgebracht und anschließend vernetzen gelassen wird.

## Claims

1. Crosslinkable composition comprising
(A) 100 parts by weight of compounds (A) of the formula
Y-[(CR¹₂)_{b}-SiRₐ(OR²)₃₋ₐ]ₓ (I)
where
Y is an x-valent organic polymer radical bonded via nitrogen, oxygen, sulphur, or carbon and which comprises, as polymer chain, polyoxyalkylene, hydrocarbon polymer, polyurethane, polyester, polyamide, polyacrylate, polymethacrylate, or polycarbonate,
R may be identical or different and is a monovalent, optionally substituted, SiC-bonded hydrocarbon radical,
R¹ may be identical or different and is hydrogen atom or a monovalent, optionally substituted hydrocarbon radical, which may be attached to the carbon atom by nitrogen, phosphorus, oxygen, sulphur or carbonyl group,
R² may be identical or different and is hydrogen atom or a monovalent, optionally substituted hydrocarbon radical,
X is an integer from 1 to 10,
a may be identical or different and is 0, 1, or 2, and
b may be identical or different and is an integer from 1 to 10, and
(B) more than 50 parts by weight of silicone resins comprising units of the formula
R³_{c}(R⁴O)_{d}R⁵ₑSiO_{(4-c-d-e)/2} (II),
where
R³ may be identical or different and is hydrogen atom, a monovalent, SiC-bonded, optionally substituted aliphatic hydrocarbon radical, or a divalent, optionally substituted, aliphatic hydrocarbon radical which bridges two units of the formula (II),
R⁴ may be identical or different and is hydrogen atom or a monovalent, optionally substituted hydrocarbon radical,
R⁵ may be identical or different and is a monovalent, SiC-bonded, optionally substituted aromatic hydrocarbon radical,
c is 0, 1, 2, or 3,
d is 0, 1, 2, or 3, and
e is 0, 1, or 2,
with the proviso that the sum of c+d+e is less than or equal to 3 and in at least 40% of the units of the formula (II) the sum c+e is 0 or 1,
excepting composition obtainable by mixing in a suitable mixing device, of 20.0 g of GENIOSIL^{®} STP-E10 (commercially available from Wacker Chemie AG), 10.0 g of GENIOSIL^{®} STP-E15 (commercially available from Wacker Chemie AG), 23.5 g of silicone resin (SILRES^{®} SY 231; commercially available from Wacker Chemie AG), 2.0 g of vinyltrimethoxysilane, 1.0 g of hydrophobic silica (HDK^{®} H2000; commercially available from Wacker Chemie AG), 20.5 g of aluminium trihydrate (ATH), 21.0 g of talc and 2.0 g of 3-aminopropyltrimethoxysilane.

2. Crosslinkable composition according to Claim 1, **characterized in that** radical Y in formula (I) comprises polyurethane radicals and polyoxyalkylene radicals.

3. Crosslinkable composition according to Claim 1 or 2, **characterized in that** the end groups of the compounds (A) are groups of the general formulae
-O-C(=O)-NH-(CR¹₂)_{b}-SiRₐ(OR²)₃₋ₐ (III)
and
-NH-C(=O)-NR'-(CR¹₂)_{b}-SiRₐ(OR²)₃₋ₐ (IV)
where the radicals and indices have one of the definitions specified for them above.

4. Crosslinkable composition according to one or more of Claims 1 to 3, **characterized in that** it comprises at least 60 parts by weight of component (B), based on 100 parts by weight of component (A).

5. Crosslinkable composition according to one or more of Claims 1 to 4, **characterized in that** the silicone resins (B) have an average molar mass (number average) Mₙ of at least 400 g/mol and not more than 400 000 g/mol.

6. Crosslinkable composition according to one or more of Claims 1 to 5, **characterized in that** it is a composition comprising
(A) 100 parts by weight of compounds of the formula (I),
(B) 60 to 1000 parts by weight of silicone resins comprising units of formula (II),
optionally
(C) 0.5 to 10 parts by weight of compound containing basic nitrogen,
optionally
(D) fillers,
optionally
(E) catalysts,
optionally
(F) adhesion promoters,
optionally
(G) water scavengers,
optionally
(H) additives, and
optionally
(K) adjuvants.

7. Process for producing the composition according to one or more of Claims 1 to 6 by mixing the individual components in any order.

8. Shaped article produced by crosslinking the composition according to one or more of Claims 1 to 6 or produced according to Claim 7.

9. Shaped article according to Claim 8, **characterized in that** it has a DIN EN 204 tensile shear strength of at least 7 MPa after 7-day storage under standard conditions, i.e., at 1000 hPa and 23°C.

10. Method for adhesive bonding or sealing of substrates, which comprises applying the composition according to one or more of Claims 1 to 6 or produced according to Claim 7 to the surface of at least one substrate, then contacting said surface with the second substrate to be bonded and subsequently allowing crosslinking to take place.

11. Method for producing coatings or encapsulations, which comprises applying the composition according to one or more of Claims 1 to 6 or produced according to Claim 7 to at least one substrate and subsequently allowing crosslinking to take place.

## Revendications

1. Matières réticulables contenant
(A) 100 parties en poids de composés (A) de formule
Y-[(CR¹₂)_{b}-SiRₐ(OR²)₃₋ₐ]ₓ (I),
où
Y représente un radical polymère organique x-valent, lié par un atome d'azote, d'oxygène, de soufre ou de carbone, qui comporte en tant que chaîne polymère un polyoxyalkylène, polymère hydrocarboné, polyuréthane, polyester, polyamide, polyacrylate, polyméthacrylate ou polycarbonate,
R peut être le même ou différent et représente un radical hydrocarboné monovalent, éventuellement substitué, lié par une liaison SiC,
R¹ peut être le même ou différent et représente un atome d'hydrogène ou un radical hydrocarboné monovalent, éventuellement substitué, qui peut être lié à l'atome de carbone par un atome d'azote, de phosphore, d'oxygène, de soufre ou un groupe carbonyle,
R² peut être le même ou différent et représente un atome d'hydrogène ou un radical hydrocarboné monovalent, éventuellement substitué,
x est un nombre entier valant de 1 à 10,
a peut être le même ou différent et vaut 0, 1 ou 2 et
b peut être le même ou différent et représente un nombre entier valant de 1 à 10, et
(B) plus de 50 parties en poids de résines silicone contenant des motifs de formule
R³_{c}(R⁴O)_{d}R⁵ₑSiO_{(4-c-d-e)/2} (II),
où
R³ peut être le même ou différent et représente un atome d'hydrogène, un radical hydrocarboné monovalent, éventuellement substitué, lié par une liaison SiC, ou un radical hydrocarboné aliphatique divalent, éventuellement substitué, qui relie par un pont deux motifs de formule (II),
R⁴ peut être le même ou différent et représente un atome d'hydrogène ou un radical hydrocarboné monovalent, éventuellement substitué,
R⁵ peut être le même ou différent et représente un radical hydrocarboné aromatique monovalent, éventuellement substitué, lié par une liaison SiC,
c est 0, 1, 2 ou 3,
d est 0, 1, 2 ou 3 et
e est 0, 1 ou 2,
étant entendu que la somme de c+d+e est inférieure ou égale à 3 et dans au moins 40 % des motifs de formule (II) la somme c+e est égale à 0 ou 1
à l'exclusion d'une composition pouvant être obtenue par mélange dans un appareil de mélange convenable de 20,0 g de GENIOSIL^{®} STP-E10 (disponible dans le commerce auprès de Wacker Chemie AG), 10,0 g de GENIOSIL^{®} STP-E15 (disponible dans le commerce auprès de Wacker Chemie AG), 23,5 g de résine silicone (SILRES^{®} SY 231 ; disponible dans le commerce auprès de Wacker Chemie AG), 2,0 g de vinyltriméthoxysilane, 1,0 g de silice hydrophobe (HDK H2000 ; (disponible dans le commerce auprès de Wacker Chemie AG), 20,5 g de trihydrate d'aluminium (ATH), 21,0 g de talc et 2,0 g de 3-aminopropyltriméthoxysilane.

2. Matières réticulables selon la revendication 1, **caractérisées en ce que** pour ce qui est du radical Y dans la formule (I) il s'agit de radicaux polyuréthane et de radicaux polyoxyalkylène.

3. Matières réticulables selon la revendication 1 ou 2, **caractérisées en ce que** pour ce qui est des groupes terminaux des composés (A) il s'agit de ceux de formules générales
-O-C(=O)-NH-(CR¹₂)_{b}-SiRₐ(OR²)₃₋ₐ (III)
et
-NH-C(=O)-NR'-(CR¹₂)_{b}-SiRₐ(OR²)₃₋ₐ (IV)
les radicaux et indices ayant l'une des significations indiquées plus haut pour ceux-ci.

4. Matières réticulables selon une ou plusieurs des revendications 1 à 3, **caractérisées en ce qu'**elles contiennent au moins 60 parties en poids de composant (B) par rapport à 100 parties en poids du composant (A).

5. Matières réticulables selon une ou plusieurs des revendications 1 à 4, **caractérisées en ce que** les résines silicone (B) présentent une masse molaire moyenne (moyenne en nombre) Mₙ d'au moins 400 g/mole et d'au maximum 400 000 g/mole.

6. Matières réticulables selon une ou plusieurs des revendications 1 à 5, **caractérisées en ce qu'**il s'agit de celles contenant
(A) 100 parties en poids de composés de formule (I),
(B) 60 à 1 000 parties en poids de résines silicone contenant des motifs de formule (II),
éventuellement
(C) 0,5 à 10 parties en poids de composé comportant de l'azote basique,
éventuellement
(D) des charges,
éventuellement
(E) des catalyseurs,
éventuellement
(F) des agents d'adhérence,
éventuellement
(G) des déshydratants,
éventuellement
(H) des additifs et
éventuellement
(K) des adjuvants.

7. Procédé pour la préparation de la composition selon une ou plusieurs des revendications 1 à 6, par mélange des composants individuels en un ordre quelconque.

8. Corps moulés, produits par réticulation des matières selon une ou plusieurs des revendications 1 à 6 ou préparées selon la revendication 7.

9. Corps moulés selon la revendication 8, **caractérisés en ce qu'**ils présentent une résistance à la traction et au cisaillement, mesurée selon DIN EN 204 après stockage pendant 7 jours dans des conditions normales de température et de pression, c'est-à-dire à 23 °C et sous 1 000 hPa, d'au moins 7 MPa.

10. Procédés pour le collage ou l'étanchéification de supports, dans lesquels on applique sur la surface d'au moins un support les matières selon une ou plusieurs des revendications 1 à 6 ou préparées selon la revendication 7, puis on met cette surface en contact avec le deuxième support à coller et ensuite on les laisse réticuler.

11. Procédés pour la production de revêtements ou de scellements, dans lesquels on applique sur au moins un support les matières selon une ou plusieurs des revendications 1 à 6 ou préparées selon la revendication 7 et ensuite on les laisse réticuler.
